(19) Europäisches Patentamt
European Patent Office
Office européen des brevets

(11) **EP 3 284 350 B1**

(12) **EUROPEAN PATENT SPECIFICATION**

(45) Date of publication and mention
of the grant of the patent:
**17.07.2019 Bulletin 2019/29**

(51) Int Cl.:
**A23L 2/38** *(2006.01)*          **A23L 2/60** *(2006.01)*
**A23L 2/58** *(2006.01)*          **C12G 3/00** *(2019.01)*
**C12C 5/04** *(2006.01)*

(21) Application number: **17773656.8**

(22) Date of filing: **03.02.2017**

(86) International application number:
**PCT/JP2017/003977**

(87) International publication number:
**WO 2017/169107 (05.10.2017 Gazette 2017/40)**

(54) **BEVERAGE WITH REDUCED COLOR FADING**

GETRÄNK MIT VERMINDERTER FARBVERBLASSUNG

BOISSON À DÉGRADATION DE COULEUR ATTÉNUÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2016 JP 2016072007**

(43) Date of publication of application:
**21.02.2018 Bulletin 2018/08**

(73) Proprietor: **Suntory Holdings Limited
Kita-ku, Osaka-shi
Osaka 530-8203 (JP)**

(72) Inventors:
• **IZUMI, Akiko
Kawasaki-shi
Kanagawa 211-0067 (JP)**
• **URAI, Soichiro
Kawasaki-shi
Kanagawa 211-0067 (JP)**
• **NISHIBORI, Tomoyuki
Kawasaki-shi
Kanagawa 211-0067 (JP)**
• **NAGAO, Koji
Kawasaki-shi
Kanagawa 211-0067 (JP)**

(74) Representative: **Mewburn Ellis LLP
City Tower
40 Basinghall Street
London EC2V 5DE (GB)**

(56) References cited:
WO-A1-2014/186084    WO-A1-2014/186250
WO-A1-2014/186250    JP-A- 2010 521 163
JP-A- 2015 221 019    US-A1- 2013 071 521

• INDRA PRAKASH ET AL: "Development of Next Generation Stevia Sweetener: Rebaudioside M", FOODS, vol. 3, no. 1, 27 February 2014 (2014-02-27), pages 162-175, XP055309887, DOI: 10.3390/foods3010162
• HIROSHI MURAKAMI ET AL.: 'Amai To to Amakunai To' JOURNAL OF THE SOCIETY FOR BIOSCIENCE AND BIOENGINEERING vol. 89, no. 8, 2011, JAPAN, pages 486 - 490

**Description**

TECHNICAL FIELD

The present invention relates to a beverage wherein the fading of a caramel colouring in the beverage is reduced.

BACKGROUND ART

In order to address diversifying consumer needs, various beverages are developed and commercially available. Saccharides such as sucrose are components extremely ordinarily blended in beverages for the purposes of giving sweetness, and the like, but the influence of excess intake on health has been pointed out, and there are needs for low calorie beverages. Needs for naturally derived materials are also increasing. In order to meet these needs, naturally derived sweeteners having a high degree of sweetness compared with saccharides are attracting attention. JP-A-2009/517043 (WO2007/070224) discloses a functional sweetener composition containing a vitamin, a high intensity sweetener, and a sweetness-improving composition.

Prakash et al., in "Development of Next-generation Stevia Sweetener: rebaudioside M", FOODS vol. 3 no. 1 pp. 162-175, 27 February 2014, discussed the properties of the natural zero-calorie high-potency sweetener rebaudioside M (hereinafter "RebM") from Stevia rebaudiana, tested its sweet characteristics alone and in blends with RebB or erythritol and proposed its use in foods and beverages.

WO2014/186250 described a range of foods and beverages comprising RebM, optionally combined with other sweeteners which may be other rebaudiosides.

SUMMARY OF THE INVENTION

Technical Problem

One of the natural sweeteners is a stevia extract, and the inventors of this application have conducted a study on the use of stevia extracts in beverages. In the course of the study, a problem was revealed that when a stevia extract is blended into a beverage containing caramel colouring, the fading of the caramel colouring in the beverage further progresses. As natural sweeteners Stevioside, rebaudiosides (hereinafter referred to as "Reb"), and the like as the sweet components of stevia extracts are known, and the details will be described later.

The present invention has been made in view of the above-described problem and has an object to provide a beverage wherein fading of a caramel colouring is reduced in spite of a stevia extract being blended.

Solution to the Problem

The present inventors conducted extensive studies to solve the above problem and surprisingly found that, of the stevia extracts, when a ratio of a content of RebA to a content of RebM is adjusted to a predetermined range, the fading of a caramel colouring in the beverage is reduced. Based on the finding, the present inventors completed the present invention.

In a first aspect (claim 1) the invention provides a beverage wherein fading of a caramel colouring is reduced, the beverage meeting the following conditions (A) to (E):

(A) the beverage contains RebA and RebM, and the ratio of a content of RebM to a content of RebA is 2.4 to 2.8,
(B) Lab values of the beverage are respectively L: 45 to 55, a: 10 to 20 and b: 25 to 35,
(C) a content of the caramel colouring is 0.01 to 0.5 wt% (w/w),
(D) Brix of the beverage is 1 to 13, and
(E) a ratio of a difference in Lab values between after light irradiation at 55000 lux for 15 hours and 15 minutes has been carried out and before the light irradiation is carried out: $((L2-L1)^2 + (a2-a1)^2 + (b2-b1)^2)^{1/2}$

(wherein:

L1 is the L value before light irradiation, L2 is the L value after light irradiation,
a1 is the a value before light irradiation, a2 is the a value after light irradiation,
b1 is the b value before light irradiation, b2 is the b value after light irradiation) to a difference in Lab values between before and after the light irradiation of a control (an aqueous solution containing a caramel colouring at a concentration of 2960 mg/L) is 0.99 to 1.01.

The caramel colouring may be caramel IV.

The content of RebA in the beverage may be 1 to 30 ppm.

The content of RebM in the beverage may be 10 to 550 ppm.

The Lab values of the beverage may be respectively L: 47 to 53, a: 16 to 20, and b: 29 to 34.

In a further aspect (claim 8) the invention provides a method for reducing fading of a caramel colouring in the beverage, the method comprising the steps of:

(A) blending RebA and RebM, adjusting a ratio of the content of RebM to the content of RebA to be 2.4 to 2.8,
(B) adjusting Lab values of the beverage to be respectively L: 45 to 55, a: 10 to 20 and b: 25 to 35,
(C) adjusting the content of caramel coloring to be 0.01 to 0.5 wt% (w/w), and
(D) adjusting the Brix of the beverage to be 1 to 13.

ADVANTAGEOUS EFFECTS OF THE INVENTION

According to the present invention, a beverage can be provided wherein fading of a caramel colouring is reduced.

BRIEF DESCRIPTION OF DRAWINGS

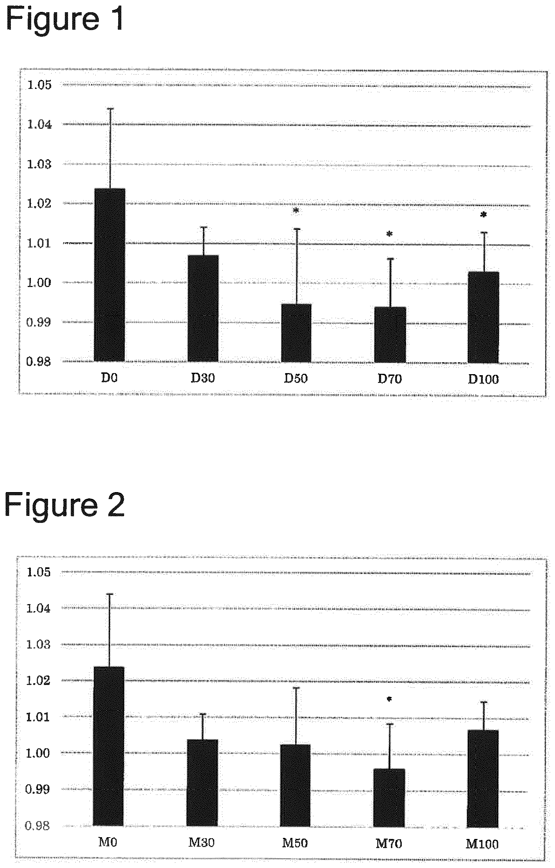

Figure 1 is a graph showing caramel colouring fading reduction effects when a ratio of a content of RebD to a content of RebA is adjusted. For example, D0 means a beverage sample in which RebD is not contained and only RebA is contained (that is, 100%). Additionally, D70 means a beverage sample containing 70% of RebD and 30% of RebA in Brix ratio in terms of sucrose.

Figure 2 is a graph showing caramel colouring fading reduction effects when a ratio of a content of RebM to a content of RebA is adjusted. For example, M100 means a beverage sample in which RebA is not contained and only RebM is contained (that is, 100%). Additionally, M50 means a beverage sample containing 50% of each of RebA and RebM in Brix ratio in terms of sucrose.

DESCRIPTION OF EMBODIMENTS

The beverages embodying the present invention will be described below.

Reb (rebaudioside) is known as a sweet component contained in stevia extracts. Stevia extract is obtained by extraction from stevia dry leaves and purification. Stevia is an Asteraceae perennial plant native to Paraguay in South America, and its scientific name is Stevia rebaudiana Bertoni. Stevia comprises a component having about 300 times or more the sweetness of sugar and is therefore grown in order to extract this sweet component and use it as a natural sweetener. As Rebs, RebA, RebB, RebC, RebD, and RebE are known. Further, recently, the presence of various glycosides such as RebM described in WO2010/038911 and JP-A-2012-504552 have been reported. Among various Rebs, RebA is evaluated as a sweetener having a high degree of sweetness and good sweetness and is widely used. In embodiments of the present invention, as stevia extracts, RebA, RebD and RebM are focused on. RebA, RebD and RebM are available on the market and can also be synthesized by an organic chemical method. Alternatively, using a stevia extract as a starting raw material, RebA, RebD and RebM can also be separated and purified. For example, RebA can be purified according to the method described in JP-A-2009/517043 (WO2007/070224), RebD can be purified according to the method described in US8414949, and RebM can be purified according to the method described in Foods 2014, 3(1), 162-175; doi: 10.3390/foods3010162. RebA, RebD and RebM may be analysed by any method and can be analysed, for example, by high performance liquid chromatograph (HPLC) set under conditions described in WO2010/038911 and JP-A-2012-504552 . RebA, RebD and RebM are analysed herein by that method, unless otherwise described.

In a beverage embodying the present invention, RebA and RebM are blended at a particular content ratio. Note that "RebD and/or RebM" used herein means that both of RebD and RebM may be contained, or either one of RebD or RebM may be contained. Thus, the content ratio can be the ratio of a content of RebM to a content of RebA.

In a beverage embodying the present invention, the ratio of a content of RebM to a content of RebA is 2.4 to 2.8.

The above content ratios herein can be converted to a Brix ratio (in terms of sucrose). RebA has 300 times, RebD has 285 times and RebM has 285 times the degree of sweetness of sucrose. The Brix ratio (in terms of sucrose) can be calculated from a degree of sweetness of Reb as compared to sucrose and a content of Reb. Accordingly, the Brix ratio in terms of sucrose can be calculated using a numerical value of 300 times a content of RebA, a numerical value of 285 times a content of RebD, and a numerical value of 285 times a content of RebM. Conversely, the above mass ratios can also be determined from the Brix ratio (in terms of sucrose) based on this calculation method. Note that the amount equivalent to Brix 1 in terms of sucrose is 33.3 ppm for RebA, 35.1 ppm for RebD, and 35.1 ppm for RebM.

The inventors of this application found for the first time that RebA is involved in a progress of the caramel colouring fading in beverages containing stevia extracts. The embodiment of the present invention, in caramel colouring-containing beverages, is to reduce the fading of such a colouring by decreasing a content of RebA as the stevia extract. The content of RebA in the beverage is, for example, 350 ppm or less, preferably 300 ppm or less, more preferably 250 ppm or less, 200 ppm or less, 150 ppm or less, 100 ppm or less, 50 ppm or less, or 30 ppm or less, but not limited thereto. RebA may be contained in the beverage to a degree that sweetness is slightly felt and, for example, at 1 ppm or more, preferably 5 ppm or more, more preferably 10 ppm or more. The "ppm" used herein means weight/volume (w/v) ppm, unless otherwise described.

As described above, when the content of RebA as the stevia extract in the beverage is simply decreased, the sweetness derived from the stevia extract cannot be sufficiently imparted to the beverage. The inventors of this application found for the first time that RebD and RebM make it harder than RebA for the fading of a caramel colouring to progress. Specifically, the embodiment of the present invention responds to the issue of the fading in the caramel colouring-containing beverages by replacing RebA with RebM as the stevia extract while enabling to impart substantial sweetness derived from the stevia extract. In a beverage embodying the present invention, the content of RebM can be the amount required as substitute for RebA. As described above, a beverage embodying the present invention can contain RebM singly or in combination with RebD. When RebM is singly contained, the content of RebM in the beverage is not particularly limited but is, for example, 10 to 550 ppm, preferably 30 to 500 ppm, more preferably 50 to 500 ppm. When both RebD and RebM are contained, the total amount of RebD and RebM is not particularly limited but is, for example, 10 to 550 ppm, preferably 30 to 500 ppm, more preferably 50 to 500 ppm.

In a beverage embodying the present invention, the degree of sweetness can be adjusted so that moderate sweetness can be felt, but not limited thereto. For such a degree of sweetness, Brix (in terms of sucrose) of the beverage embodying the present invention is 1 to 13. Such a Brix can be suitably set in accordance with the use condition of the beverage and set within a range from, for example, 3 to 13, or 7 to 13. Additionally, the Brix can be set within a low range or a high range and can be, in such an instance, for example, 1 to 5, 1 to 4, 1 to 3), 1 to 2, or 10 or more, 11 or more, or 12 or more. The Brix (in terms of sucrose) of the beverage embodying the present invention may be adjusted only by the total content of RebA, RebD, and RebM, or may be adjusted as the total value of the entire sweeteners using a sweetener other than RebA, RebD, and RebM.

A beverage embodying the present invention contains a caramel colouring. Here, as the caramel colouring, a known edible caramel colouring can be used. For example, a substance obtained by heat-treating an edible carbohydrate typified by sugar or glucose, one obtained by adding an acid or an alkali and heat-treating an edible carbohydrate, and the like can be used as the caramel colouring. In addition, a sugar contained in a fruit juice or a vegetable juice can also be caramelized and used, and in this case, the sugar can be caramelized by heat treatment, treatment with an acid or an alkali, or the like.

In the present invention, various classes of caramels such as caramel I, caramel II, caramel III and caramel IV can be used as the caramel colouring. Caramels of each class (I to IV) are classified based on the presence or absence of a treatment using a sulphurous acid compound and an ammonium compound at the time of producing the caramel colouring. Specifically, caramel I is the caramel colouring obtained by heat-treating an edible carbohydrate without using a sulphurous acid compound and an ammonium compound. Caramel II is the caramel colouring obtained by heat-treating an edible carbohydrate without using an ammonium compound but using a sulphurous acid compound. Caramel III is the caramel colouring obtained by heat-treating an edible carbohydrate without using a sulphurous acid compound but using an ammonium compound. Caramel IV is the caramel colouring obtained by heat-treating an edible carbohydrate using both of a sulphurous acid compound and an ammonium compound. In a beverage embodying the present invention, caramel IV is preferably contained but not particularly limited thereto.

In a beverage embodying the present invention, Lab values of the beverage are respectively L: 45 to 55, a: 10 to 20, and b: 25 to 35, and the beverage colour can be adjusted in such a way that Lab values are to be such values. The above Lab values are preferably L: 47 to 53, a: 16 to 20, and b: 29 to 34. The Lab values of a beverage embodying the present invention can be adjusted by the content of the caramel colouring. Specifically, a beverage embodying the present invention contains the caramel colouring so that Lab values of the beverage are respectively L: 45 to 55, a: 10 to 20, b: 25 to 35.

In a beverage embodying the present invention, Lab values of the beverage can be measured using a measurement apparatus known by those skilled in the art. As a specific example, Lab values can be measured using a spectrophotometer (colorimeter) SE6000, a product of Nippon Denshoku Industries Co., Ltd., as illustrated later in Test Examples, but not limited thereto.

Further, in a beverage embodying the present invention, the content of caramel colouring can be specified by the concentration. The content of caramel colouring in the beverage is 0.01 to 0.5 wt% (w/w), preferably 0.03 to 0.5 wt% (w/w), more preferably 0.05 to 0.4 wt% (w/w).

In a beverage embodying the present invention, the method for measuring the content of the caramel colouring is not limited and the content can be measured using gas chromatography, HPLC, or the like. A method such as a quantitative method, a qualitative method, a confirmation testing method or a purity test method described in various official compendia may be suitably applied, or a method described in publication may be modified and used. The content can also be determined from the indication and description on a product or a product brochure, or a document concerning a factory order, a manufacturing record or an approval and licence.

A beverage embodying the present invention may further comprise components that can be used in foods and drinks, such as polyphenols such as catechins, extracts of plants, caffeine, cinnamaldehyde, and sweeteners (saccharides such as sugar and isomerized liquid sugars, and high intensity sweeteners such as aspartame, sucralose, and acesulfame K), perfumes, acidulants (citric acid, tartaric acid, malic acid, phosphoric acid, and lactic acid), colorants, fruit juices, fruit juice purees, milk, milk products, other flavours, and nutrient supplements (vitamins, calcium, minerals, and amino acids), as long as the components do not inhibit the effect of the present invention. These components may be blended singly or as a combination of a plurality of these components in the beverage.

In the present invention, the kind of beverage is not particularly limited and may be any of carbonated beverages, non-carbonated beverages, alcoholic beverages, non-alcoholic beverages, energy drinks or functional beverages.

When a beverage embodying the present invention is a carbonated beverage (that is, effervescent), the carbonation method is not particularly limited and carbonic acid gas may be produced by fermentation in the beverage or carbonic acid gas may be artificially injected into the beverage. When the carbonic acid gas is injected, the gas pressure at a liquid temperature of 20°C can be, for example, 1 to 5 kgf/cm$^2$, preferably 2 to 5 kgf/cm$^2$, more preferably 3 to 5 kgf/cm$^2$. The carbonic acid gas can be added using a method known by those skilled in the art. The carbonic acid gas pressure in the beverage can be measured, for example, using a Kyoto Electronics Manufacturing Co., Ltd. gas volume analyser GVA-500A.

A beverage embodying the present invention can be filled into a container but is not particularly limited thereto. For the container, a container of any form and material can be used and may be, for example, a bottle, a can, a barrel or a PET bottle. Additionally, the method for filling the beverage into a container is also not particularly limited.

In a method embodying the present invention, RebA, RebD and RebM can be blended in the beverage so that the content in the beverage is to be an amount as described above. Further, in the method of the present invention, the caramel colouring can also be blended in the beverage to be the content as described above. The blending order of each component is not particularly limited and each component may be blended simultaneously. The method of the present invention can also include a step of blending the components and materials described above and a step of adjusting the contents thereof. In the method of the present invention, various elements such as the kind and content of the components in the beverage are as described above in the beverage of the present invention and thus obvious therefrom.

The method embodying the present invention can reduce, in beverages containing a caramel colouring, a degree of fading of the caramel colouring.

EXAMPLES

Hereinbelow, details of the present invention are specifically described with reference to Test Examples and Examples. The following description only intends to facilitate understanding of the present invention but does not intend to limit the scope of the present invention.

Beverage samples were prepared as follows to examine degrees of the fading of the caramel colouring in the beverages.

First, caramel IV (Z-80 (Semba Tohka Industries Co., Ltd.)) used as the caramel colouring was added to pure water so that a concentration thereof was 2960 mg/L. Next, RebA, RebD and RebM were added to the obtained caramel colouring-containing solution so that the amounts blended were as shown in the table below. As controls for correcting Lab measured values, caramel colouring-containing solutions to which RebA, RebD and RebM were not added were used. Composition M70 is according to the claimed invention.

Table 1

| Sample name | | D0 | D3 | D50 | D70 | D100 | M0 | M30 | M50 | M70 | M100 |
|---|---|---|---|---|---|---|---|---|---|---|---|
| | RebA | 33.3 | 23.3 | 16.7 | 10.0 | 0 | 33.3 | 23.3 | 16.7 | 10.0 | 0 |
| Content (ppm) | RebD | 0 | 10.5 | 17.5 | 24.6 | 35.1 | 0 | 0 | 0 | 0 | 0 |
| | RebM | 0 | 0 | 0 | 0 | 0 | 0 | 10.5 | 17.5 | 24.6 | 35.1 |

(continued)

| Sample name | | D0 | D3 | D50 | D70 | D100 | M0 | M30 | M50 | M70 | M100 |
|---|---|---|---|---|---|---|---|---|---|---|---|
| Brix ratio in terms of sucrose | RebA | 100 | 70 | 50 | 30 | 0 | 100 | 70 | 50 | 30 | 0 |
| | RebD | 0 | 30 | 50 | 70 | 100 | - | - | - | - | - |
| | RebM | - | - | - | - | - | 0 | 30 | 50 | 70 | 100 |

Lab values (that is, L, a and b values) of the beverage samples and the control samples for correcting Lab measured values were measured using a spectrophotometer (a product of Nippon Denshoku Industries Co., Ltd., SE6000).

Subsequently, each sample was irradiated with light at 55000 lux for 15 hours and 15 minutes in an artificial climate chamber (Nippon Medical & Chemical Instruments Co., Ltd., NC-410HH).

After the light irradiation, Lab values of the beverage samples and the control samples for correcting the Lab measured values were measured again using the above apparatus.

The differences in the Lab values of each beverage sample between before and after the light irradiation were determined, and relative values, when the difference in the Lab values of the control samples for correcting the Lab measured values between before and after the light irradiation was 1, were calculated respectively. Note that the difference in the Lab values was determined using the following formulae.

L value before the light irradiation: L1, L value after the light irradiation: L2
a value before the light irradiation: a1, a value after the light irradiation: a2
b value before the light irradiation: b1, b value after the light irradiation: b2

$$\text{Lab value difference} = ((L2\text{-}L1)^2 + (a2\text{-}a1)^2 + (b2\text{-}b1)^2)^{1/2}$$

The results on examining the differences in the Lab values of each beverage sample are shown in the table below. Additionally, the results for the value of each beverage sample relative to the control sample for correcting the measured Lab values are shown in Figures 1 and 2.

Table 2

| | No. | Before irradiation | | | After irradiation | | | Lab value Difference | Average |
|---|---|---|---|---|---|---|---|---|---|
| | | L | a | b | L | a | b | | |
| Control for correction | 1 | 51.46 | 18.1 | 33 | 66.41 | 10.91 | 39.69 | 17.89 | 17.52 |
| | 2 | 51.46 | 18.1 | 33 | 65.81 | 11.17 | 39.47 | 17.20 | |
| | 3 | 51.46 | 18.1 | 33 | 66.05 | 11.07 | 39.56 | 17.47 | |
| D0 (M0) | 1 | 51.37 | 18.2 | 32.99 | 66.42 | 10.88 | 39.69 | 18.03 | 17.93 |
| | 2 | 51.37 | 18.2 | 32.99 | 66.38 | 10.89 | 39.68 | 17.99 | |
| | 3 | 51.37 | 18.2 | 32.99 | 66.19 | 10.95 | 39.6 | 17.77 | |
| D30 | 1 | 51.7 | 18 | 33.12 | 66.7 | 10.69 | 39.76 | 17.96 | 17.63 |
| | 2 | 51.7 | 18 | 33.12 | 66.11 | 10.97 | 39.56 | 17.28 | |
| | 3 | 51.7 | 18 | 33.12 | 66.45 | 10.83 | 39.69 | 17.67 | |
| D50 | 1 | 51.76 | 17.97 | 33.17 | 66.26 | 10.86 | 39.61 | 17.39 | 17.43 |
| | 2 | 51.76 | 17.97 | 33.17 | 66.52 | 10.81 | 39.7 | 17.66 | |
| | 3 | 51.76 | 17.97 | 33.17 | 66.17 | 10.97 | 39.58 | 17.26 | |
| D70 | 1 | 51.71 | 18.01 | 33.15 | 66.39 | 10.86 | 39.66 | 17.58 | 17.43 |
| | 2 | 51.71 | 18.01 | 33.15 | 66.08 | 10.99 | 39.55 | 17.23 | |
| | 3 | 51.71 | 18.01 | 33.15 | 66.31 | 10.86 | 39.62 | 17.50 | |

(continued)

|  | No. | Before irradiation | | | After irradiation | | | Lab value Difference | Average |
|---|---|---|---|---|---|---|---|---|---|
|  |  | L | a | b | L | a | b |  |  |
| D100 | 1 | 51.57 | 18.1 | 33.1 | 66.14 | 10.99 | 39.59 | 17.46 | 17.58 |
|  | 2 | 51.57 | 18.1 | 33.1 | 66.22 | 10.94 | 39.61 | 17.56 |  |
|  | 3 | 51.57 | 18.1 | 33.1 | 66.36 | 10.85 | 39.63 | 17.72 |  |
| M30 | 1 | 51.5 | 17.97 | 33 | 66.34 | 10.83 | 39.62 | 17.75 | 17.58 |
|  | 2 | 51.5 | 17.97 | 33 | 66.34 | 10.78 | 39.61 | 17.77 |  |
|  | 3 | 51.5 | 17.97 | 33 | 65.91 | 11.08 | 39.48 | 17.24 |  |
| M50 | 1 | 51.66 | 17.96 | 33.1 | 66.52 | 10.76 | 39.69 | 17.78 | 17.56 |
|  | 2 | 51.66 | 17.96 | 33.1 | 66.15 | 10.93 | 39.56 | 17.35 |  |
|  | 3 | 51.66 | 17.96 | 33.1 | 66.32 | 10.89 | 39.63 | 17.54 |  |
| M70 | 1 | 51.67 | 17.97 | 33.11 | 66.23 | 10.91 | 39.59 | 17.43 | 17.43 |
|  | 2 | 51.67 | 17.97 | 33.11 | 66.33 | 10.85 | 39.64 | 17.56 |  |
|  | 3 | 51.67 | 17.97 | 33.11 | 66.11 | 10.97 | 39.56 | 17.29 |  |
| M100 | 1 | 51.6 | 18 | 33.07 | 66.29 | 10.91 | 39.63 | 17.58 | 17.63 |
|  | 2 | 51.6 | 18 | 33.07 | 66.18 | 10.92 | 39.56 | 17.46 |  |
|  | 3 | 51.6 | 18 | 33.07 | 66.52 | 10.78 | 39.71 | 17.86 |  |

As shown in Figures 1 and 2, the degree of the fading of the caramel colouring was reduced by replacing a part or all of the content of RebA with RebD or RebM. Particularly, the degree of the fading of the caramel colouring was reduced when the Brix ratio in terms of sucrose of RebD or RebM to RebA ((RebD or RebM)/RebA) is 3/7 or more, that is, a mass ratio of 0.45 or more. Note that it was demonstrated that the D50, D70 and D100 beverage samples had reduced fading with statistically significant differences from the D0 (that is, RebA ratio of 100%) beverage sample. Similarly, it was demonstrated that the M70 beverage sample had reduced fading with statistically significant difference to the M0 (that is, RebA ratio of 100%) beverage sample.

Further, for RebM it is revealed that the higher the ratio of RebM to RebA becomes, the smaller the entire number of moles becomes, as shown in the table below. However, despite the entire number of moles becoming smaller, the degree of the fading of the caramel colouring ended up being reduced when the RebM ratio became higher. This is presumably attributed to RebM being a compound of larger molecular weight than RebA, thereby blocking the caramel colouring more from the light.

Table 3

| Sample name | | M0 | M30 | M50 | M70 | M100 |
|---|---|---|---|---|---|---|
| Content (ppm) | RebA | 33.3 | 23.3 | 16.7 | 10 | 0 |
|  | RebM | 0 | 10.5 | 17.5 | 24.6 | 35.1 |
| Content (mol) | RebA | 1.72E-06 | 1.20E-06 | 8.63E-07 | 5.17E-07 | 0 |
|  | RebM | 0 | 4.07E-07 | 6.78E-07 | 9.53E-07 | 1.36E-06 |
| Total (mol) | | 1.72E-06 | 1.61E-06 | 1.54E-06 | 1.47E-06 | 1.36E-06 |

**Claims**

1. A beverage with reduced fading of a caramel coloring, the beverage meeting the following conditions (A) to (E):

    (A) the beverage contains RebA and RebM, and the ratio of the content of RebM to the content of RebA is 2.4 to 2.8,

(B) Lab values of the beverage are L: 45 to 55, a: 10 to 20 and b: 25 to 35,

(C) the content of caramel coloring is 0.01 to 0.5 wt% (w/w),

(D) the Brix of the beverage is 1 to 13, and

(E) the ratio of (i) a Lab value difference for the beverage before and after light irradiation and (ii) the Lab value difference for a control aqueous solution containing the caramel coloring at a concentration of 2960 mg/L, is from 0.99 to 1.01,

the Lab value difference being $((L2-L1)^2 + (a2-a1)^2 + (b2-b1)^2)^{1/2}$ where

L1 is the L value before light irradiation, L2 is the L value after light irradiation;

a1 is the a value before light irradiation, a2 is the a value after light irradiation;

b1 is the b value before light irradiation, b2 is the b value after light irradiation, and

the light irradiation is at 55000 lux for 15 hours and 15 minutes.

**2.** A beverage according to claim 1 wherein the caramel coloring is caramel IV.

**3.** A beverage according to claim 1 or 2 wherein a content of RebA in the beverage is 1 to 30 ppm.

**4.** A beverage according to any one of claims 1 to 3 wherein the content of RebM in the beverage is 10 to 550 ppm.

**5.** A beverage according to any one of claims 1 to 3 wherein both RebD and RebM are contained and the total amount of RebD and RebM is 10 to 550 ppm.

**6.** A beverage according to any one of claims 1 to 5 wherein the Lab values of the beverage are L: 47 to 53, a: 16 to 20 and b: 29 to 34.

**7.** A beverage according to any one of claims 1 to 6 further comprising any one or more of polyphenols, plant extracts, caffeine, cinnamaldehyde, sweeteners, perfumes, acidulants, colorants, fruit juices, fruit juice purees, milk, milk products, other flavours and nutrient supplements.

**8.** A method for reducing fading of a caramel coloring in a beverage, the method comprising the steps of:

(a) blending RebA and RebM, adjusting a ratio of the content of RebM to the content of RebA to be within the range 2.4 to 2.8,

(b) adjusting Lab values of the beverage to be respectively L: 45 to 55, a: 10 to 20 and b: 25 to 35,

(c) adjusting the content of caramel coloring to be 0.01 to 0.5 wt% (w/w), and

(d) adjusting the Brix of the beverage to be 1 to 13.

**9.** A method of claim 8 wherein the caramel coloring is caramel IV.

**10.** A method of claim 8 or 9 wherein the content of RebA in the beverage is 1 to 30 ppm.

**11.** A method of any one of claims 8 to 10 wherein the content of RebM in the beverage is 10 to 550 ppm.

**12.** A method of any one of claims 8 to 10 wherein both RebD and RebM are contained in the beverage and the total amount of RebD and RebM is 10 to 550 ppm.

**13.** A method of any one of claims 8 to 11 wherein the Lab values of the beverage are L: 47 to 53, a: 16 to 20 and b: 29 to 34.

**14.** A method of any one of claims 8 to 12 wherein the beverage further comprises any one or more of polyphenols, plant extracts, caffeine, cinnamaldehyde, sweeteners, perfumes, acidulants, colorants, fruit juices, fruit juice purees, milk, milk products, other flavours and nutrient supplements.

**Patentansprüche**

**1.** Getränk mit reduziertem Verblassen von Zuckerkulör, wobei das Getränk folgende Bedingungen (A) bis (E) erfüllt:

(A) das Getränk enthält RebA und RebM und das Verhältnis des Gehalts an RebM zu dem Gehalt an RebA beträgt 2,4 bis 2,8;
(B) die Lab-Werte des Getränks sind: L: 45 bis 55, a: 10 bis 20 und b: 25 bis 35,
(C) der Gehalt an Zuckerkulör beträgt 0,01 bis 0,5 Gew.-%,
(D) der °Brix des Getränks beträgt 1 bis 13, und
(E) das Verhältnis von (i) einer Lab-Wert-Differenz für das Getränk vor und nach der Bestrahlung mit Licht und (ii) der Lab-Wert-Differenz für eine wässrige Kontrolllösung, die das Zuckerkulör in einer Konzentration von 2960 mg/l enthält, beträgt 0,99 bis 1,01,
wobei die Lab-Wert-Differenz $((L2-L1)^2 + (a2-a1)^2 + (b2-b1)^2)^{1/2}$ beträgt, worin
L1 der L-Wert vor der Lichtbestrahlung ist, L2 der L-Wert nach der Lichtbestrahlung ist;
a1 der a-Wert vor der Lichtbestrahlung ist, a2 der a-Wert nach der Lichtbestrahlung ist;
b1 der b-Wert vor der Lichtbestrahlung ist, b2 der b-Wert nach der Lichtbestrahlung ist, und
die Lichtbestrahlung 15 h und 15 min lang bei 55.000 lux beträgt.

2. Getränk nach Anspruch 1, wobei das Zuckerkulör Caramel IV ist.

3. Getränk nach Anspruch 1 oder 2, wobei der Gehalt an RebA in dem Getränk 1 bis 30 ppm beträgt.

4. Getränk nach einem der Ansprüche 1 bis 3, wobei der Gehalt an RebM in dem Getränk 10 bis 550 ppm beträgt.

5. Getränk nach einem der Ansprüche 1 bis 3, wobei sowohl RebD als auch RebM enthalten sind und die Gesamtmenge an RebD und RebM 10 bis 550 ppm beträgt.

6. Getränk nach einem der Ansprüche 1 bis 5, wobei die Lab-Werte des Getränks wie folgt sind: L: 47 bis 53, a: 16 bis 20 und b: 29 bis 34.

7. Getränk nach einem der Ansprüche 1 bis 6, das außerdem eines oder mehrere von Polyphenolen, Pflanzenextrakten, Koffein, Zimtaldehyd, Süßstoffen, Duftstoffen, Säuerungsmitteln, Farbstoffen, Fruchtsäften, Fruchtsaftpürees, Milch, Milchprodukten, anderen Geschmacksstoffen und Nahrungsergänzungsmitteln umfasst.

8. Verfahren zum Reduzieren des Verblassens eines Zuckerkulörs in einem Getränk, wobei das Verfahren folgende Schritte umfasst:

(a) das Mischen von RebA und RebM, das Anpassen eines Verhältnisses des Gehalts an RebM zu dem Gehalt an RebA, so dass dieses im Bereich von 2,4 bis 2,8 liegt;
(b) das Anpassen der Lab-Werte des Getränks, so dass diese wie folgt sind: L 45 bis 55, a: 10 bis 20 und b: 25 bis 35;
(c) das Anpassen des Gehalts an Zuckerkulör, so dass dieser 0,01 bis 0,5 Gew.-% beträgt; und
(d) das Anpassen der °Brix des Getränks auf 1 bis 13.

9. Verfahren nach Anspruch 8, wobei das Zuckerkulör Caramel IV ist.

10. Verfahren nach Anspruch 8 oder 9, wobei der RebA-Gehalt in dem Getränk 1 bis 30 ppm beträgt.

11. Verfahren nach einem der Ansprüche 8 bis 10, wobei der RebM-Gehalt in dem Getränk 10 bis 550 ppm beträgt.

12. Verfahren nach einem der Ansprüche 8 bis 10, wobei sowohl RebD als auch RebM in dem Getränk enthalten sind und die Gesamtmenge an RebD und RebM 10 bis 550 ppm beträgt.

13. Verfahren nach einem der Ansprüche 8 bis 11, wobei die Lab-Werte des Getränks wie folgt sind: L: 47 bis 53, a: 16 bis 20 und b: 29 bis 34.

14. Verfahren nach einem der Ansprüche 8 bis 12, wobei das Getränk außerdem eines oder mehrere von Polyphenolen, Pflanzenextrakten, Koffein, Zimtaldehyd, Süßstoffen, Duftstoffen, Säuerungsmitteln, Farbstoffen, Fruchtsäften, Fruchtsaftpürees, Milch, Milchprodukten, anderen Geschmacksstoffen und Nahrungsergänzungsmitteln umfasst.

**Revendications**

1.  Boisson présentant une atténuation réduite d'une coloration caramel, la boisson satisfaisant aux conditions suivantes (A) à (E) :

    (A) la boisson contient RebA et RebM, et le rapport de la teneur en RebM à la teneur en RebA est de 2,4 à 2,8,
    (B) les valeurs Lab de la boisson sont L : 45 à 55, a : 10 à 20 et b : 25 à 35,
    (C) la teneur en colorant caramel est de 0,01 à 0,5 % en poids (m/m),
    (D) la valeur Brix de la boisson est de 1 à 13, et
    (E) le rapport de (i) une différence de valeur Lab pour la boisson avant et après irradiation de lumière et (ii) la différence de valeur Lab pour une solution aqueuse témoin contenant le colorant caramel à une concentration de 2960 mg/l, est de 0,99 à 1,01,
    la différence de valeur Lab étant $((L2-L1)^2 + (a2-a1)^2 + (b2-b1)^2)^{1/2}$ où
    L1 est la valeur L avant irradiation de lumière, L2 est la valeur L après irradiation de lumière ;
    a1 est la valeur a avant irradiation de lumière, a2 est la valeur a après irradiation de lumière ;
    b1 est la valeur b avant irradiation de lumière, b2 est la valeur b après irradiation de lumière,
    et l'irradiation de lumière est à 55 000 lux pendant 15 heures et 15 minutes.

2.  Boisson selon la revendication 1, dans laquelle le colorant caramel est le caramel IV.

3.  Boisson selon la revendication 1 ou 2, dans laquelle la teneur en RebA dans la boisson est de 1 à 30 ppm.

4.  Boisson selon l'une quelconque des revendications 1 à 3, dans laquelle la teneur en RebM dans la boisson est de 10 à 550 ppm.

5.  Boisson selon l'une quelconque des revendications 1 à 3, dans laquelle RebD et RebM sont tous deux présents et la quantité totale de RebD et RebM est de 10 à 550 ppm.

6.  Boisson selon l'une quelconque des revendications 1 à 5, dans laquelle les valeurs Lab de la boisson sont L : 47 à 53, a : 16 à 20 et b : 29 à 34.

7.  Boisson selon l'une quelconque des revendications 1 à 6 comprenant en outre l'un ou plusieurs quelconques parmi des polyphénols, des extraits de plante, de la caféine, du cinnamaldéhyde, des édulcorants, des parfums, des acidulants, des colorants, des jus de fruits, des purées de jus de fruits, du lait, des produits laitiers, d'autres arômes et suppléments nutritifs.

8.  Procédé de réduction de l'atténuation d'une coloration caramel dans une boisson, le procédé comprenant les étapes de :

    (a) mélange de RebA et RebM, ajustement d'un rapport de la teneur en RebM à la teneur en RebA de façon à être dans la plage de 2,4 à 2,8,
    (b) ajustement des valeurs Lab de la boisson de façon à être respectivement L : 45 à 55, a : 10 à 20 et b: 25 à 35,
    (c) ajustement de la teneur en colorant caramel de façon à être de 0,01 à 0,5 % en poids (m/m), et
    (d) ajustement de la valeur Brix de la boisson de façon à être de 1 à 13.

9.  Procédé selon la revendication 8 dans lequel le colorant caramel est le caramel IV.

10. Procédé selon la revendication 8 ou 9, dans lequel la teneur en RebA dans la boisson est de 1 à 30 ppm.

11. Procédé selon l'une quelconque des revendications 8 à 10, dans lequel la teneur en RebM dans la boisson est de 10 à 550 ppm.

12. Procédé selon l'une quelconque des revendications 8 à 10, dans lequel RebD et RebM sont tous deux présents dans la boisson et la quantité totale de RebD et de RebM est de 10 à 550 ppm.

13. Procédé selon l'une quelconque des revendications 8 à 11, dans lequel les valeurs Lab de la boisson sont L : 47 à 53, a : 16 à 20 et b : 29 à 34.

**14.** Procédé selon l'une quelconque des revendications 8 à 12, dans lequel la boisson comprend en outre l'un ou plusieurs quelconques parmi des polyphénols, des extraits de plante, de la caféine, du cinnamaldéhyde, des édulcorants, des parfums, des acidulants, des colorants, des jus de fruits, des purées de jus de fruits, du lait, des produits laitiers, d'autres arômes et suppléments nutritifs.

# Figure 1

# Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009517043 A
- WO 2007070224 A
- WO 2014186250 A
- WO 2010038911 A
- JP 2012504552 A
- US 8414949 B

### Non-patent literature cited in the description

- **PRAKASH et al.** Development of Next-generation Stevia Sweetener: rebaudioside M. *FOODS,* 27 February 2014, vol. 3 (1), 162-175
- *Foods,* 2014, vol. 3 (1), 162-175